# EUROPÄISCHE PATENTSCHRIFT

(11) **EP 2 633 205 B1**
(45) Veröffentlichungstag und Bekanntmachung des Hinweises auf die Patenterteilung: **03.08.2016**
(21) Anmeldenummer: 11775795.5
(22) Anmeldetag: 26.10.2011
(51) Int. Cl.: F16D 65/092

(54) **BREMSBELAG FÜR EINE SCHEIBENBREMSE**
BRAKE LINING FOR A DISK BRAKE
GARNITURE DE FREIN POUR FREIN À DISQUE

(30) Priorität: 29.10.2010 DE 102010050103
(43) Veröffentlichungstag der Anmeldung: 04.09.2013
(73) Patentinhaber: KNORR-BREMSE Systeme für Nutzfahrzeuge GmbH, 80809 München (DE)
(72) Erfinder: CAMILO-MARTINEZ, José, 82008 Unterhaching (DE); BAUMGARTNER, Johann, 85368 Moosburg (DE); PAHLE, Wolfgang, 83707 Bad Wiessee (DE)
(86) Internationale Anmeldenummer: PCT/EP2011/068748
(87) Internationale Veröffentlichungsnummer: WO 2012/055912

(56) Entgegenhaltungen:
- WO-A1-98/55778
- DE-A1-102005 052 435
- DE-A1-102008 003 528

## Beschreibung

Die Erfindung betrifft einen Bremsbelag für eine Scheibenbremse gemäß dem Oberbegriff der Ansprüche 1 und 2.

Mit solchen Bremsbelägen bestückte Scheibenbremsen kommen hauptsächlich bei Nutzfahrzeugen zum Einsatz, wobei der Bremsenverschleiß im Fernverkehrseinsatz wesentlich durch häufiges Anpassungsbremsen bestimmt wird, das zwar bei relativ hohen Fahrgeschwindigkeiten, jedoch mit niedrigen bis mittleren Bremsdrücken erfolgt. Selten auftretende Gefahrbremsungen mit hoher Bremskraft haben auf den Gesamtverschleiß der Bremse nur sehr geringen Einfluss.

Die Krafteinleitung auf den Bremsbelag erfolgt über die Druckstempel, die entsprechend der Gattung, an an der Belagträgerplatte angeformten Druckstücken anliegen.

Dabei ist die Position der Druckstücke bzw. der Druckstempel durch die konstruktiv bedingten Gegebenheiten sowie den Installationsbedingungen vorgegeben.

Als Folge einer nicht optimalen Positionierung der Krafteinleitungszonen ergibt sich eine ungünstige Druckverteilung in der Belagreibfläche, die auch durch zusätzliche Druckplatten oder besonders dickwandige Belagträgerplatten nicht ausreichend kompensiert werden kann. Daraus folgt als besonders nachteilig zum einen ein relativ hohes Gewicht, das einer stetigen Forderung nach einer Gewichtsoptimierung entgegensteht, und zum anderen ein ungleichmäßiger Bremsbelag- und Bremsscheibenverschleiß. Naturgemäß verkürzt sich dadurch die Standzeit der Bremse, was zu erhöhten Betriebskosten führt.

Ein gattungsgemäßer Bremsbelag ist aus der DE 10 2008 003 528 A1 bekannt. Dabei weist die dem Reibbelag abgewandte Rückseite der Belagträgerplatte angeformte Druckstücke auf.

Im Gegensatz dazu sind bei einem in der DE 10 2005 052 435 A1 gezeigten und beschriebenen Bremsbelag solche Druckstücke nicht geoffenbart.

Ein vergleichbarer Bremsbelag ist aus der WO 98/55778 A1 bekannt, dessen Belagträgerplatte gleichfalls keine auf der dem Reibbelag abgewandten Rückseite angeformte Druckstücke aufweist. Die sich ergebenden Probleme bezüglich einer Durchbiegung des Bremsbelages bei einer Bremsung sind in dieser Schrift nicht thematisiert.

Der Erfindung liegt daher die Aufgabe zugrunde, einen Bremsbelag der gattungsgemäßen Art so weiterzuentwickeln, dass seine Standzeit verbessert wird.

Diese Aufgabe wird durch einen Bremsbelag mit den Merkmalen des Anspruchs 1 oder 2 gelöst.

Durch die maßlichen Vorgaben sowohl der Positionierung der Druckstücke, als auch der Längen und Radienmaße der Belagträgerplatte werden in der gesamten Reibbelagfläche gleiche Verschleißbedingungen geschaffen, sowie eine Gewichtsminimierung der Belagträgerplatte bei gleichzeitig bestmöglicher Druckverteilung erreicht.

Zur Ermittlung der erfindungsgemäßen Angaben werden die beiden Bremsbelaghälften, die spiegelsymmetrisch quer zur Umfangserstreckung der ringsegmentartigen Belagträgerplatte ausgebildet sind, separat betrachtet.

Dabei wird jeweils der Flächenschwerpunkt ermittelt, der in einer weiteren Betrachtung den Bezugspunkt für die Festlegung des Druckstückes darstellt. Eine Krafteinleitung direkt im Flächenschwerpunkt würde bei idealer Steifigkeit der Belagträgerplatte eine homogene Druckverteilung in der Reibfläche ergeben.

Jedoch ist der Belagverschleiß in erster Näherung durch die umgesetzte Bremsenergie vorgegeben. Werden die verschiedenen Bereiche der Reibfläche unter diesem Aspekt betrachtet, so ergibt sich, dass die radial außen liegenden Flächenbereiche bei der dort vorliegenden höheren Gleitgeschwindigkeit bei gleichem Flächendruck in der Belagreibfläche eine höhere Energiedichte aufweisen als die radial innen liegenden Bereiche der Reibfläche.

Diese Erkenntnis führt dazu, dass zur Erzielung eines gleichmäßigen Verschleißverhaltens nicht die Flächenpressung in der gesamten Belagreibfläche konstant sein sollte, sondern die Energiedichte, d.h., die spezielle Bremsleistung (N_{spez}), gebildet aus dem Produkt aus Flächendruck (p) · Reibbeiwert (µ) · Gleitgeschwindigkeit (v), wobei die Bremsleistung (N_{spez}), als konstant anzustreben ist.

Dieser Zusammenhang wird dadurch beeinflusst, dass der Belagreibwert gleichfalls unter der Einwirkung von Druck, Gleitgeschwindigkeit und Temperatur Veränderungen erfährt. Da der Gesamtverschleiß maßgeblich durch Anpassungsbremsungen bestimmt wird, wie sie eingangs beschrieben sind, bei denen die durch Druck und Temperatur bedingten Veränderungen noch gering sind, kann auf die zusätzliche Berücksichtigung dieser Einflussgrößen verzichtet werden.

Der Einfluss unterschiedlicher Gleitgeschwindigkeiten ist jedoch ausgeprägt vorhanden. Bei den relativ geringen Bremskräften einer typischen Anpassungsbremsung mit ca. 1,5 bar Bremsdruck, werden Drücke in der Reibfläche von 150 - 200 N/cm² erreicht. Unter diesen Bedingungen und bei einem Verhältnis der Gleitgeschwindigkeit am äußeren zum inneren Reibringdurchmesser von 1,6 beträgt das Verhältnis des Reibwertes am äußeren zum inneren Reibringdurchmesser etwa 0,8. D.h., bei homogener Druckverteilung ist die erzeugte Reibleistung am Außendurchmesser des Reibbandes 1,6 0,8 = 1,28 · höher als am inneren Reibringdurchmesser. Der Faktor 1,28 ist somit durch veränderte Druckverteilung zu kompensieren.

Dies geschieht, indem die Krafteinleitungsposition der Druckstempel, also der Druckstücke, gegenüber der für gleichmäßige Druckverteilung ermittelten Position auf der Verbindungsgeraden der Flächenschwerpunkte der Belaghälften um einen entsprechend festzulegenden Betrag radial zur Achsmitte hin verschoben werden. Die Größe dieses Betrages ist von den Abmessungen von Bremsscheibe und Belag sowie der Form des Belages abhängig und beträgt für eine Bremse für 22,5" Felgengröße 1 mm bis 6mm. In der praktischen Erprobung haben sich Werte von ca. 3 mm als besonders geeignet erwiesen.

Ein weiterer, die Druckverteilung und damit die Energiedichte in der Reibfläche beeinflussender Faktor ist die Elastizität der Belagträgerplatte, die die von den Druckstempeln eingeleitete Kraft in eine gleichmäßige Flächenpressung verteilen soll.

Da die Belagträgerplatte in den von den Krafteinleitungszonen beabstandeten Bereichen unter dem Flächendruck des Belages nachgibt, ergibt sich eine Wölbung, die in der Belagmitte und an den tangential gerichteten Enden des Bremsbelages maximale Werte annimmt. Unter den stärker gewölbten Zonen der Belagträgerplatte herrscht zwangsläufig eine geringere Flächenpressung, da sich die unter dem Druck komprimierte Reibbelagmasse teilweise entspannt.

Diese Wölbung wird bislang durch entsprechend stabil und damit auch entsprechend schwer dimensionierte Belagträgerplatten oder zusätzliche Druckplatten gering gehalten.

Eine Möglichkeit zur Erzielung einer geringstmöglichen Durchbiegung der Trägerplatte bei dennoch geringem Gewicht, besteht in einer optimalen Positionierung der Druckstücke in tangentialer Richtung. Eine minimale Durchbiegung wird nämlich erreicht, wenn die Krafteinleitungsposition auf einer Verbindungsgeraden nach nach der Bedingung N_{spez}, (Bremsleistung) = Flächendruck (p) · Reibbeiwert (µ) · Gleitgeschwindigkeit (v) = konstant so gewählt wird, dass die Durchbiegung in Belagmitte und an den tangentialen Belag-Enden gleich groß ist. Durchgeführte Untersuchungen an einer Scheibenbremse für 22,5"-Räder ergaben, dass eine Anordnung der Krafteinleitungspositionen am Flächenschwerpunkt der Belaghälften 3 - 15 mm tangential nach außen verschoben die bestmögliche Druckverteilung ergibt.

Die an die Belagträgerplatte angeformten Druckstücke sind scheiben- oder ringförmig ausgebildet und leiten Wärme aus dem Bremsbelag in die Bauteile der Zuspanneinrichtung. Da hierdurch eine unerwünschte Belastung der entsprechenden Bauteile eintritt, wird die Kontaktfläche zwischen dem jeweiligen Druckstempel und der Auflagefläche des Druckstücks gerade so groß gewählt, dass auch bei maximaler Temperatur am Bremsbelag im Falle einer Vollbremsung keine plastische Verformung an den Druckstempeln und/oder den Auflageflächen der Druckstücke eintritt. Je nach Material der Belagträgerplatte haben sich Auflageflächen pro Druckstück von 15 - 35 cm² als ausreichend erwiesen. Bei Belagträgerplatten aus Guss können die Auflageflächen aufgrund der hohen Druckfestigkeit des Gussmaterials im unteren Bereich der angegebenen Werte liegen.

Bei Scheibenbremsen für 22,5"-Räder weist die Auflagefläche einen Durchmesser von 55 mm auf, während die Gesamtdicke im Auflagebereich 14mm beträgt, bei einer Dicke der Belagträgerplatte von 9 mm im benachbarten Umgebungsbereich.

Für die Festlegung der genannten Betriebsparameter werden die Bedingungen einer Anpassungsbremsung zugrunde gelegt, und zwar Bremsdruck von 1,0 bis 2,0 bar, einer Geschwindigkeit von 60 - 90 km/h und einer Bremsentemperatur von 100 bis 200°C.

Vorteilhafte Weiterbildungen der Erfindung sind in den Unteransprüchen gekennzeichnet.

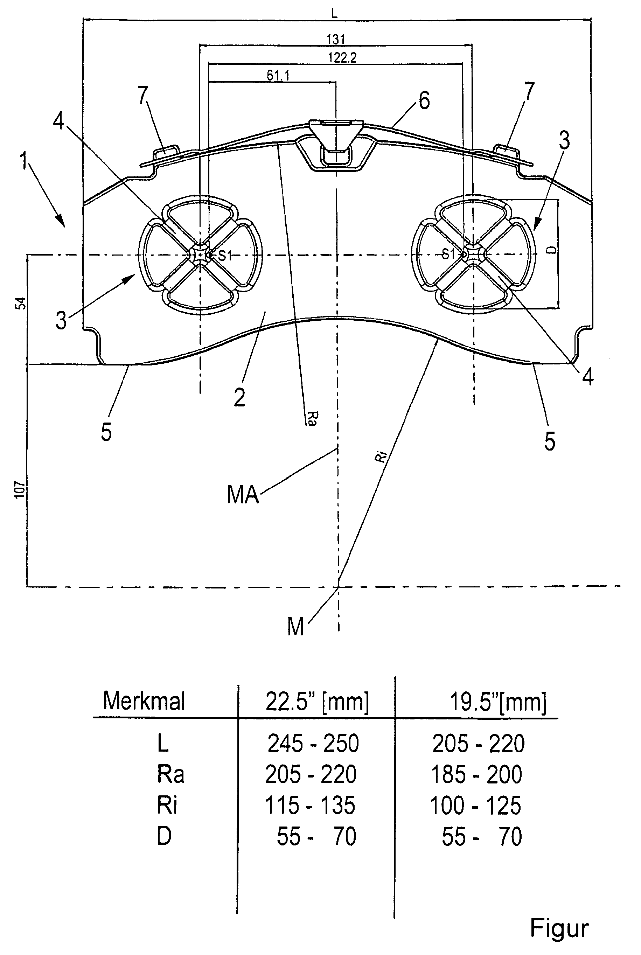

Ein Bremsbelag gemäß der Erfindung wird nachfolgend anhand der beigefügten Zeichnung beschrieben.

Die einzige Figur zeigt einen Bremsbelag in einer rückseitigen Ansicht.

Der in der Figur gezeigte Bremsbelag, der insgesamt mit dem Bezugszeichen 1 versehen ist, weist eine Belagträgerplatte 2 auf, an die Druckstücke 3 angeformt sind, an denen in Funktion jeweils ein Druckstempel einer Zuspanneinrichtung einer Scheibenbremse anliegt.

Die Größe der Auflagefläche der Druckstücke 3 ist zur Reduzierung des Wärmeeintrags in die Zuspanneinrichtung der Bremse so gewählt, dass bei erwärmter Bremse, d.h., einer Temperatur der Belagträgerplatte 2 > 450°C, im Fall einer Vollbremsung keine plastische Verformung an den Druckstempeln und/oder der Belagträgerplatte 2 eintritt. Die Auflagefläche beträgt, je nach Materialwahl, 20 - 35 cm², während der Durchmesser der kreisförmigen Auflageflächen 50 - 70 mm beträgt, vorzugsweise 60-65 mm.

Der Abstand der Mittelpunkte der Auflageflächen voneinander beträgt 125 - 135 mm, vorzugsweise 131 mm.

Die ringsegmentförmige Belagträgerplatte 2, die auf der den Druckstücken 3 gegenüberliegenden Seite einen nicht gezeigten Reibbelag trägt und an der Außenkante mit Laschen 7 versehen ist, zur Führung einer Belaghaltefeder 6, ist spiegelsymmetrisch zu einer Mittelachse MA ausgebildet, wobei der Radius des Außenrandes mit Ra und der Radius des Innenrandes mit Ri bezeichnet ist.

Der Innenrand geht beidseitig nach außen hin in Auflagerflächen 5 über, mittels derer der Bremsbelag 1 beispielsweise auf einem fahrzeugseitigen Bremsträger aufliegt.

Der Abstand der Mittelpunkte der beiden Druckstücke 3 von den jeweiligen Auflagerflächen 5 beträgt 48 bis 58 mm, vorzugsweise 53 - 56 mm. Der Abstand der Auflagerflächen 5 zum Radienmittelpunkt M beträgt 107 mm.

Die Druckstücke 3 sind gegenüber der Dicke der Belagträgerplatte 2 im umgebenden Bereich um das 1,3 bis 1,8fache dicker, vorzugsweise um das 1,5 bis 1,6fache.

Zur besseren Wärmeabfuhr aus dem Kontaktbereich der Druckstücke 3 mit dem jeweils zugeordneten Bremsstempel sind quer verlaufende Nuten 4 vorgesehen.

Wie erwähnt, soll durch die Festlegung der Krafteinleitungspositionen, definiert durch die Mitte der Druckstücke 3, gleiche spezifische Bremsleistungen (N_{spez} = p · µ · v = konst.) in der gesamten Reibbelagfläche erzielt werden. Hierzu werden die halbseitigen Flächenschwerpunkte S1 der Reibbelagfläche definiert.

Der Einfluss der unterschiedlichen Gleitgeschwindigkeit am inneren und äußeren Rand des Bremsbelages erfordert eine Verschiebung der Kraftangriffspunkte, definiert durch die Mitte der Druckstücke 3, gegenüber dem jeweiligen halbseitigen Flächenschwerpunkt, um die geringere Gleitgeschwindigkeit in diesem Bereich durch höhere Flächenpressung auszugleichen. Der Betrag der Verschiebung liegt zwischen 0 und 6 mm, vorzugsweise bei 3 mm.

In der Tabelle unterhalb der figürlichen Darstellung des Bremsbelages 1 sind die Abmessungen des jeweiligen Bremsbelages 1 für ein 22,5" und 19,5"-Rad aufgeführt, wobei L die Länge des Bremsbelages, d.h. der Belagträgerplatte 2, Ra den äußeren Radius, Ri den inneren Radius der Belagträgerplatte 2 und D den Durchmesser der Auflagefläche des Druckstückes wiedergeben.

## Patentansprüche

1. Bremsbelag für eine in ein Rad einbaubare Scheibenbremse, mit einer einen Reibbelag tragenden, ringsegmentartigen Belagträgerplatte (2), deren innerer Radius (Ri) beidseitig in gerade Auflagerflächen (5) übergeht und die auf ihrer dem Reibbelag abgewandten Rückseite zwei abständig zueinander angeordnete, angeformte Druckstücke (3) aufweist, wobei die Länge (L) der Belagträgerplatte (2) 205 - 220 mm, der innere Radius (Ri) 100 - 125 mm und der äußere Radius (Ra) 185 - 200 mm beträgt, **dadurch gekennzeichnet dass** die Mittenabstände der Druckstücke (3) zueinander 3-15 mm größer sind als die Flächenschwerpunkte der Belaghälften des, bezogen auf eine radiale Mittelachse (MA) spiegelsymmetrischen Bremsbelages (1).

2. Bremsbelag für eine in ein Rad einbaubare Scheibenbremse, mit einer einen Reibbelag tragenden, ringsegmentartigen Belagträgerplatte (2), deren innerer Radius Ri beidseitig in gerade Auflagerflächen (5) übergeht und die auf ihrer dem Reibbelag abgewandten Rückseite zwei abständig zueinander angeordnete, angeformte Druckstücke (3) aufweist, wobei die Länge (L) der Belagträgerplatte (2) 245 - 250 mm, der innere Radius (Ri) 115 - 135 mm und der äußere Radius (Ra) der Belagträgerplatte (2) 205 - 220 mm beträgt, **dadurch gekennzeichnet dass** die Mittenabstände der Druckstücke (3) zueinander 3-15 mm größer sind als die Flächenschwerpunkte der Belaghälften des, bezogen auf eine radiale Mittelachse (MA) spiegelsymmetrischen Bremsbelages (1).

3. Bremsbelag nach Anspruch 1 oder 2, **dadurch gekennzeichnet, dass** der Auflagedurchmesser der Druckstücke (3) 50 - 70 mm, vorzugsweise 60-65 mm beträgt.

4. Bremsbelag nach einem der vorhergehenden Ansprüche, **dadurch gekennzeichnet, dass** die Auflagefläche der Druckstücke (3) jeweils 15 - 35 cm² beträgt.

5. Bremsbelag nach Anspruch 2, **dadurch gekennzeichnet, dass** die Gesamtdicke der Belagträgerplatte (2) im Bereich der Druckstücke (3) 14 mm beträgt und die Dicke der Belagträgerplatte (2) außerhalb der Druckstücke (3) 9 mm.

6. Bremsbelag nach einem der vorhergehenden Ansprüche, **dadurch gekennzeichnet, dass** der Mittenabstand der Druckstücke (3) 125-135 mm, vorzugsweise 131 mm beträgt.

7. Bremsbelag nach einem der vorhergehenden Ansprüche, **dadurch gekennzeichnet, dass** der Mittenabstand der Druckstücke (3) zu den Auflagerflächen (5) jeweils 48 - 58 mm, vorzugsweise 53 - 56 mm beträgt.

8. Bremsbelag nach einem der vorhergehenden Ansprüche, **dadurch gekennzeichnet, dass** die Dicke der Druckstücke (3) 1,3-1,8fach, vorzugsweise 1,5 -1,6fach dicker ist als die Dicke der Belagträgerplatte (2) im Übrigen.

9. Verwendung eines Bremsbelages nach Anspruch 1 in einer in ein Rad mit einer Größe von 19,5" eingebauten Scheibenbremse.

10. Verwendung eines Bremsbelages nach Anspruch 2 in einer in ein Rad mit einer Größe von 22,5" eingebauten Scheibenbremse.

## Claims

1. Brake pad for a disc brake suitable for installation into a wheel, the brake pad comprising an annular segment-type backing plate (2), which supports a friction lining, and the inner radius (Ri) of which merges on both sides into straight contact surfaces (5), and which has on the rear side remote from the friction lining two moulded-on pressure pads (3) arranged at a distance from one another, wherein the length (L) of the backing plate (2) is 205 - 220 mm, its inner radius (Ri) is 100 - 125 mm and its outer radius (Ra) is 185 - 200 mm, **characterised in that** the centre-to-centre distances of the pressure pads (3) are greater by 3 - 15 mm than the area centres of gravity of the brake pad halves of the brake pad (1), which is mirror-symmetric relative to a radial central axis (MA).

2. Brake pad for a disc brake suitable for installation into a wheel, the brake pad comprising an annular segment-type backing plate (2), which supports a friction lining, and the inner radius (Ri) of which merges on both sides into straight contact surfaces (5), and which has on the rear side remote from the friction lining two moulded-on pressure pads (3) arranged at a distance from one another, wherein the length (L) of the backing plate (2) is 245 - 250 mm, its inner radius (Ri) is 115 - 135 mm and its outer radius (Ra) is 205 - 220 mm, **characterised in that** the centre-to-centre distances of the pressure pads (3) are greater by 3 - 15 mm than the area centres of gravity of the brake pad halves of the brake pad (1), which is mirror-symmetric relative to a radial central axis (MA).

3. Brake pad according to claim 1 or 2, **characterised in that** the contact diameter of the pressure pads (3) is 50 - 70 mm, preferably 60 - 65 mm.

4. Brake pad according to any of the preceding claims, **characterised in that** the contact area of each pressure pad (3) is 15 - 35 cm².

5. Brake pad according to claim 2, **characterised in that** the overall thickness of the backing plate (2) is 14 mm in the region of the pressure pads (3) and the thickness of the backing plate (2) is 9 mm outside the pressure pads (3).

6. Brake pad according to any of the preceding claims, **characterised in that** the centre-to-centre distance of the pressure pads (3) is 125 - 135 mm, preferably 131 mm.

7. Brake pad according to any of the preceding claims, **characterised in that** the centre-to-centre distance of the pressure pads (3) from the contact surfaces (5) is in each case 48 - 58 mm, preferably 53 - 56 mm.

8. Brake pad according to any of the preceding claims, **characterised in that** the thickness of the pressure pads (3) is 1.3 - 1.8 times, preferably 1.5 to 1.6 times, greater than the thickness of the rest of the backing plate (2).

9. Use of a brake pad according to claim 1 in a disc brake installed into a wheel of a size of 19.5".

10. Use of a brake pad according to claim 2 in a disc brake installed into a wheel of a size of 22.5".

## Revendications

1. Garniture de frein pour un frein à disque pouvant être monté dans une roue, comprenant une plaque de porte-garniture portant une garniture de friction, de type en segments d'anneau, dont le rayon (Ri) le plus à l'intérieur se transforme des deux côtés en des surfaces (5) d'application rectilignes et qui a, du côté arrière éloigné de la garniture de friction, deux pièces (3) d'application d'une pression, qui sont formées en étant à distance l'une de l'autre, dans laquelle
la longueur (L) de la plaque (2) de porte-garniture va de 205 à 220 mm, le rayon (Ri) intérieur va de 100 à 125 mm et le rayon (Ra) extérieur va de 185 à 200 mm, **caractérisée en ce que** les distances moyennes des pièces (3) d'application d'une pression l'une par rapport à l'autre sont plus grandes de 3 à 15 mm que celles des centres de gravité de surface des moitiés de la garniture (1) de frein symétrique comme en un miroir par rapport à un axe (MA) médian radial.

2. Garniture de frein pour un frein à disque pouvant être monté dans une roue, comprenant
une plaque de porte-garniture portant une garniture de friction, de type en segments d'anneau, dont le rayon (Ri) le plus à l'intérieur se transforme des deux côtés en des surfaces (5) d'application rectilignes et qui a, du côté arrière éloigné de la garniture de friction, deux pièces (3) d'application d'une pression, qui sont formées en étant à distance l'une de l'autre, dans laquelle
la longueur (L) de la plaque (2) de porte-garniture va de 245 à 250 mm, le rayon (Ri) intérieur va de 115 à 135 mm et le rayon (Ra) extérieur va de 205 à 220 mm, **caractérisée en ce que** les distances moyennes des pièces (3) d'application d'une pression l'une par rapport à l'autre sont plus grandes de 3 à 15 mm que celles des centres de gravité de surface des moitiés de la garniture (1) de frein symétrique comme en un miroir par rapport à un axe (MA) médian radial.

3. Garniture de frein suivant la revendication 1 ou 2, **caractérisée en ce que** le diamètre d'application des pièces (3) d'application d'une pression va de 50 à 70 mm, de préférence de 60 à 65 mm.

4. Garniture de frein suivant la revendication 1 ou 2, **caractérisée en ce que** la surface d'application des pièces (3) d'application d'une pression va respectivement de 15 à 35 cm².

5. Garniture de frein suivant la revendication 2, **caractérisée en ce que** l'épaisseur totale de la plaque (2) de porte-garniture est, dans la partie des pièces (3) d'application d'une pression, de 14 mm et l'épaisseur de la plaque (2) de porte-garniture est de 9 mm à l'extérieur des pièces (3) d'application d'une pression.

6. Garniture de frein suivant l'une des revendications précédentes, **caractérisée en ce que** la distance moyenne des pièces (3) d'application d'une pression va de 125 à 135 mm en étant, de préférence, de 131 mm.

7. Garniture de frein suivant l'une des revendication précédentes, **caractérisée en ce que** la distance moyenne des pièces (3) d'application d'une pression aux surfaces (5) d'application va respectivement de 48 à 58 mm, de préférence de 53 à 56 mm.

8. Garniture de frein suivant l'une des revendications précédentes, **caractérisée en ce que** l'épaisseur des pièces (3) d'application d'une pression est plus épaisse de 1,3 à 1,8 fois, de préférence de 1,5 à 1,6 fois, que l'épaisseur de la plaque (2) de porte-garniture ailleurs.

9. Utilisation d'une garniture de frein suivant la revendication 1 dans un frein à disque incorporé dans une roue ayant une dimension de 19,5".

10. Utilisation d'une garniture de frein suivant la revendication 2 dans un frein à disque incorporé dans une roue ayant une dimension de 22,5".
